# EUROPÄISCHE PATENTSCHRIFT

(11) **EP 2 210 326 B1**
(45) Veröffentlichungstag und Bekanntmachung des Hinweises auf die Patenterteilung: **23.11.2016**
(21) Anmeldenummer: 08804458.1
(22) Anmeldetag: 19.09.2008
(51) Int. Cl.: H02J 1/00, H02J 7/14

(54) **BORDNETZ UND VERFAHREN ZUM BETREIBEN EINES BORDNETZES**
ONBOARD POWER SUPPLY AND METHOD FOR OPERATING AN ONBOARD POWER SUPPLY
RÉSEAU DE BORD ET SON PROCÉDÉ DE FONCTIONNEMENT

(30) Priorität: 09.10.2007 DE 102007048342
(43) Veröffentlichungstag der Anmeldung: 28.07.2010
(73) Patentinhaber: Continental Automotive GmbH, 30165 Hannover (DE)
(72) Erfinder: GÖTZENBERGER, Martin, 85051 Ingolstadt (DE); BOLZ, Stephan, 93102 Pfatter (DE); GÖTTE, Carsten, 93080 Pentling / Grossberg (DE)
(86) Internationale Anmeldenummer: PCT/EP2008/062524
(87) Internationale Veröffentlichungsnummer: WO 2009/047103

(56) Entgegenhaltungen:
- EP-A- 1 318 590
- WO-A-2004/070911
- DE-A1- 4 028 242
- DE-A1- 10 305 939
- DE-A1-102005 042 654

## Beschreibung

Die Erfindung betrifft ein Bordnetz und ein Verfahren zum Betreiben eines Bordnetzes, das mehrere Teilnetze und zumindest einen Hochleistungsverbraucher aufweist.

Durch den in den letzten Jahren gestiegenen Energiebedarf der elektrischen Sicherheitssteuerungs- und Komfortverbraucher sind Kraftfahrzeugbordnetze mit Bleiakkumulatoren an ihre Leistungsgrenzen gestoßen.

In einem heute üblichen Kraftfahrzeugbordnetz haben sämtliche Energielieferanten und Verbraucher eine gemeinsame Spannungslage von nominal 12 V. Der Energieaustausch zwischen den einzelnen Komponenten erfolgt über eine gemeinsame Leistungsebene.

Solange der Verbrennungsmotor läuft und dieser den Generator antreibt, deckt der Generator den Gesamtbedarf an elektrischer Energie. Der Bleiakkumulator deckt zusätzliche Bedarfsspitzen ab und wirkt damit als Energiepuffer. Bei Fahrzeugstillstand übernimmt der Bleiakkumulator die Energieversorgung des Kraftfahrzeugs.

Die wachsenden Anforderungen an die Energieversorgung in einem Kraftfahrzeug würden aufgrund der Leistungsdaten zu einer Vergrößerung der Kapazität der Energiespeicher führen, was jedoch im Widerspruch zu einer gewünschten Reduktion des Fahrzeuggewichts steht.

Dabei wurde zunächst in einem ersten Schritt die Energieversorgung des Starters von dem herkömmlichen Bleiakkumulator entkoppelt. Hierzu ist ein weiterer Energiespeicher, meist ein Doppelschichtkondensator vorgesehen, der den Starter mit Energie versorgt und der über einen Spannungswandler aus dem Bordnetz und dem dort angeordneten Bleisäureakkumulator nachgeladen wird.

Hierzu muss jedoch auch das Bordnetz einen relativ großen und schweren Bleisäureakkumulator aufweisen. Die Verwendung von kleineren und leichteren Lithium-Ionenakkumulatoren oder Lithium-Polymerakkumulatoren erweist sich als schwierig, da diese Akkumulatoren eine relativ hohe Anforderung an die genaue Einhaltung einer Ladespannung stellen.

Des Weiteren sind Spannungswandler erforderlich, die in der Lage sind, den Doppelschichtkondensator auch von einer Spannung von 0 Volt auf eine Maximalspannung aufzuladen. Hierbei ist ein erheblicher Elektronikaufwand für den Spannungswandler erforderlich, insbesondere für den Fall, dass der Bleisäureakkumulator tiefentladen oder defekt ist, wodurch die Spannung des Bleisäureakkumulators auf 8 bis 10 Volt absinkt. In diesem Fall ist für einen erfolgreichen Motorstart eine Ladespannung des Doppelschichtkondensators erforderlich die über der Spannung des Akkumulators liegt.

Es ist Aufgabe der Erfindung, ein Bordnetz und Verfahren zum Betreiben dieses Bordnetzes zu schaffen, das den zukünftigen Anforderungen gewachsen ist, insbesondere zu einer Gewichtsreduktion und zu einer Standzeitverlängerung führt.

Erfindungsgemäß wird diese Aufgabe durch ein Bordnetz mit den Merkmalen des Patentanspruchs 1 gelöst.

Demnach wird ein Bordnetz vorgeschlagen, welches aufweist:
- ein Starternetz mit einem Hochleistungsverbraucher, insbesondere einem Starter und einem ersten Energiespeicher, insbesondere einem Doppelschichtkondensator;
- ein Zwischennetz mit einem zweiten Energiespeicher, insbesondere einem Lithium-Polymerakkumulator;
- ein Verbrauchernetz mit zumindest einem elektrischen Verbraucher,
- wobei das Starternetz mit dem Zwischennetz über einen ersten Spannungswandler elektrisch gekoppelt ist,
- wobei das Zwischennetz mit dem Verbrauchernetz über einen zweiten Spannungswandler elektrisch gekoppelt ist und das Bordnetz eine Kontrolleinrichtung aufweist, die die elektrische Spannung im Zwischennetz in Abhängigkeit von einem Parameter steuert oder regelt.

Eine elektrische Kopplung wird insbesondere durch eine induktive oder galvanische Verbindung erreicht.

Des Weiteren wird ein Verfahren zum Betreiben des Bordnetzes vorgeschlagen, das so ausgestaltet ist, dass die elektrische Spannung im Zwischennetz in Abhängigkeit von einem Parameter gesteuert oder geregelt wird.

Darüber hinaus wird ein Verfahren vorgeschlagen, bei dem die elektrische Spannung im Verbrauchernetz in Abhängigkeit vom Betriebsmodus einer Brennkraftmaschine über den zweiten Spannungswandler und/ oder den Generator gesteuert oder geregelt wird.

Ein Vorteil der vorliegenden Erfindung liegt darin, dass das Zwischennetz durch den zweiten Spannungswandler vom Verbrauchernetz entkoppelt ist. Daher kann im Zwischennetz auch ein Energiespeicher eingesetzt werden, dessen Spannung, Stabilität und/oder Ladespannung unabhängig von den Anforderungen des Bordnetzes ist.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung der Erfindung wird im Zwischennetz ein Lithium-Ionenakkumulator oder Lithium-Polymerakkumulator angeordnet, dessen Ladespannung über der Spannung des Versorgungsbordnetzes liegt. Vorzugsweise wird hier ein Lithium-Polymerakkumulator vorgesehen, der sechs Zellen mit je 3,7 Volt aufweist, wodurch sich eine nominale Spannung von 22 Volt ergibt. Die tatsächliche Ladespannung liegt dann bei 25,2 Volt.

Weiterhin kann in einer bevorzugten Ausführungsform der zweite Spannungswandler so ausgestaltet sein, dass die maximal zulässige Ladespannung des zweiten Energiespeichers mit der erforderlichen Genauigkeit eingehalten wird und dadurch eine Überladung oder Beschädigung des zweiten Energiespeichers ausgeschlossen wird.

Auch kann in einem Fehlerfall, insbesondere bei einem Kurzschluss des zweiten Spannungswandlers, dadurch der zweite Energiespeicher nicht überladen werden, wodurch die Sicherheit des Systems weiter verbessert wird.

In einer weiteren bevorzugten Ausführungsform liegt die Spannung des Zwischennetzes über der Spannung des Bordnetzes, wodurch der erste und/oder der zweite Spannungswandler als Tiefsetzsteller ausgeführt sein können. Dies führt zu einer Bauteil- und ebenfalls zu einer Kostenreduktion.

Gemäß einer weiteren bevorzugten Ausführungsform wird der zweite Spannungswandler so betrieben, dass das Verbrauchernetz durch diesen stabilisiert werden kann. Hierdurch werden kurzfristige Strom- und Spannungsschwankungen, die beispielsweise durch eine Lastaufnahme oder einen Lastabwurf entstehen, schnell unter Einbeziehung des zweiten Energiespeichers ausgeregelt.

In einer weiteren Ausführungsform ist dem zweiten Spannungswandler ein dritter Spannungswandler parallel geschaltet, wobei in einem Ruhezustand die Energieversorgungsverbrauchernetzes über den dritten Spannungswandler erfolgt. Das Bordnetz kann insbesondere eine Weckschaltung aufweisen, die den zweiten Spannungswandler in Abhängigkeit vom Energiebedarf im Verbrauchernetz ein- oder ausschaltet.

Bei dem Parameter, der zur Steuerung oder Regelung der Spannung im Zwischennetz herangezogen wird, handelt es sich vorzugsweise um die Spannung über dem zweiten Energiespeicher, um den in oder aus dem zweiten Energiespeicher hinein oder heraus fließenden Strom, um einen Ladungszustand, einen Alterungszustand eines Energiespeichers, insbesondere des zweiten Energiespeichers und/oder einem Betriebsparameter oder Betriebszustand eines Kraftfahrzeugs.

Auch kann gemäß einer bevorzugten Ausgestaltung die Kontrolleinrichtung die Spannung im Starternetz und/oder die Spannung Verbrauchernetz unabhängig von der Spannung im Zwischennetz steuern oder regeln.

Weiter kann in einer bevorzugten Ausgestaltung das Verbrauchernetz einen Generator aufweisen. Der Generator kann - insbesondere bei einem Kraftfahrzeugbordnetz - bei Betrieb eines mit dem Generator verbundenen Verbrennungsmotors die Verbraucher mit Energie versorgen.

Gemäß einer weiteren bevorzugten Ausgestaltung weist das Verbrauchernetz einen Zwischenkreiskondensator, insbesondere einen Elektrolytkondensator auf, der dem zumindest einen Verbraucher des Bordnetzes parallel geschaltet ist. Durch den zweiten Energiespeicher des Zwischennetzes und den zweiten Spannungswandler mit dem nachgeschalteten Zwischenkreiskondensator wird der Wechselstromwiderstand der Schaltungsanordnung verringert, wodurch die Filterwirkung in Bezug auf hochfrequente Störanteile vergrößert wird.

Gemäß einer weiteren bevorzugten Ausgestaltung kann die Spannung des Verbrauchernetzes im Ruhezustand des Fahrzeugs abgesenkt werden. Die Verbrauchernetzspannung kann so gewählt werden, dass die im Ruhezustand aktiven Steuergeräte mit der in diesem Betriebszustand benötigten Spannung versorgt werden. Auf diese Weise kann bei gleichbleibender Kapazität des Energiespeichers die Stillstandzeit des Fahrzeugs erheblich vergrößert werden.

Die Erfindung wird nachfolgend anhand der in den schematischen Figuren angegebenen Ausführungsbeispiele näher erläutert. Es zeigen:
Figur 1 ein schematisches Blockschaltbild eines ersten Ausführungsbeispiels eines Bordnetzes;
Figur 2 ein schematisches Blockschaltbild eines zweiten Ausführungsbeispiels eines Bordnetzes und
Figur 3 ein schematisches Blockschaltbild eines dritten Ausführungsbeispiels eines Bordnetzes.

In allen Figuren sind gleiche beziehungsweise funktionsgleiche Elemente und Vorrichtungen - sofern nichts anderes angegeben ist - mit denselben Bezugszeichen versehen.

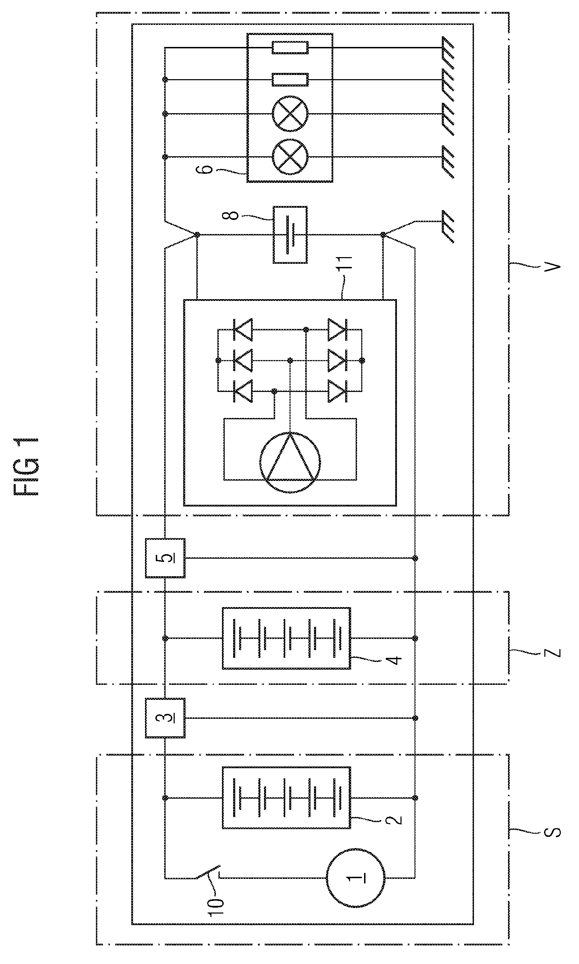

Figur 1 zeigt ein Bordnetz, das einen Hochleistungsverbraucher, hier einen Starter 1 aufweist, dem ein erster Energiespeicher 2 parallel geschaltet ist. Der Starter 1 ist üblicherweise eine elektrische Gleichstrommaschine, die über ein Getriebe oder einen Riemen mit der Kurbelwelle einer Brennkraftmaschine mechanisch gekoppelt ist. Die elektrische Verbindung zwischen dem zweiten Energiespeicher 2 und dem Starter 1 kann über einen Schalter 10, üblicherweise ein Relais, geöffnet und geschlossen werden.

Bei dem ersten Energiespeicher 2 handelt es sich um einen Energiespeicher mit einer hohen Leistungsdichte, insbesondere um einen Doppelschichtkondensator (Super Cap).

Der erste Energiespeicher 2 ist über einen ersten Spannungswandler 3 mit einem zweiten Energiespeicher 4 elektrisch verbunden. Bei diesem zweiten Energiespeicher 4 handelt es sich um einen Energiespeicher mit hoher Energiedichte, insbesondere um einen Lithium-Polymer oder um einen Lithium-Ionenakkumulator. Der zweite Energiespeicher 4 ist über einen zweiten Spannungswandler 5 mit zumindest einem elektrischen Verbraucher 6, der hier schematisch als Block dargestellt ist, verbunden. Parallel zu den Verbrauchern 6 ist im hier dargestellten Ausführungsbeispiel ein Zwischenkreiskondensator 8 angeordnet, der insbesondere zur Glättung hochfrequenter Störanteile im Verbrauchernetz dient.

Im hier dargestellten Ausführungsbeispiel bilden Starter 1 und der erste Energiespeicher 2 das sogenannte Starternetz S. Der zweite Energiespeicher 4 bildet das Zwischennetz Z und der zumindest eine Verbraucher 6 das Verbrauchernetz V. In Figur 1 sind mehrere elektrische parallel geschaltete Verbraucher dargestellt, bei diesen handelt es sich insbesondere um Verbraucher eines Kraftfahrzeugbordnetzes.

Die Trennung zwischen den verschiedenen Netzen nach der erforderlichen Leistung bzw. der erforderlichen Energie. In der hier dargestellten ist der erste Energiespeicher 2 so ausgelegt, dass er hohe Leistungen abgeben kann. Der zweite Energiespeicher 4 hingegen ist so ausgelegt, dass er eine hohe Kapazität aufweist und über eine längere Zeitdauer Energie abgeben kann.

Weiter weist das Verbrauchernetz V einen Generator 11 auf, der parallel zu den Verbrauchern 6 angeordnet ist. Im Ausführungsbeispiel gemäß Figur 1 sind der zweite Spannungswandler 5, der Generator 11 und der zumindest eine Verbraucher 6 direkt miteinander verbunden. Die Spannung U_{V} im Verbrauchernetz V kann sowohl durch den Generator 11, als auch durch den zweiten Spannungswandler 5 gesteuert oder geregelt werden.

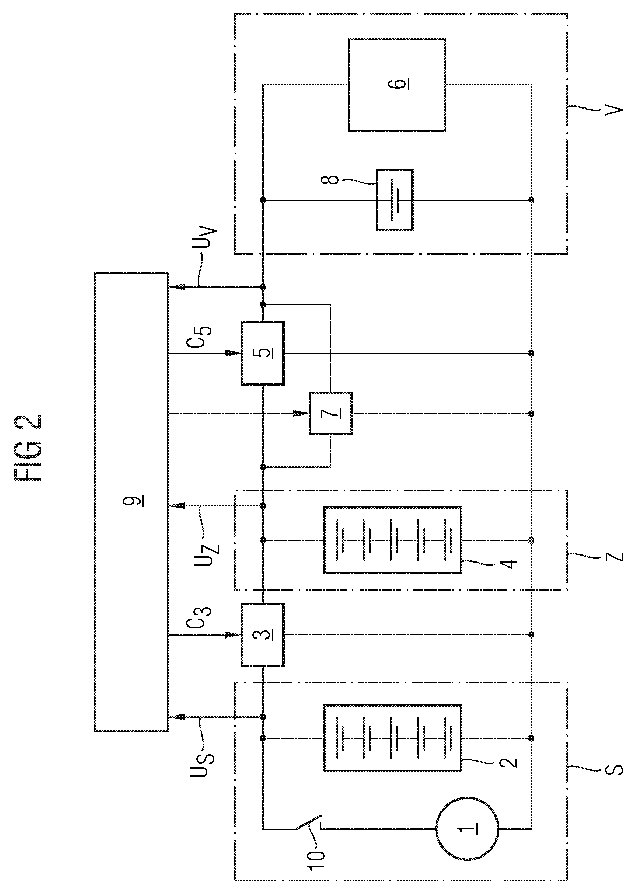

In dem in Figur 2 dargestellten Ausführungsbeispiel ist parallel zum zweiten Spannungswandler 5 ein dritter Spannungswandler 7 angeordnet, über den das Verbrauchernetz V ebenfalls aus dem Zwischennetz Z versorgt werden kann. Dieser dritte Spannungswandler 7 versorgt das Verbraucherbordnetz V im Ruhezustand mit Energie. Hierbei wird die Leistungsaufnahme des Verbrauchernetzes V überwacht und im Bedarfsfall der zweite Spannungswandler 5 aufgeweckt oder eingeschaltet. Weiter weist das Bordnetz eine Kontrolleinrichtung 9 auf, die die Spannung U_{S} im Starternetz S, die Spannung U_{Z} im Zwischennetz Z und die Spannung U_{V} im Verbrauchernetz V überwacht. Die Kontrolleinrichtung 9 steuert oder regelt in Abhängigkeit von einem Parameter P, insbesondere der Spannung U_{S}, U_{Z} und/oder U_{V}, einem in oder aus dem ersten oder zweiten Energiespeicher 2, 4 hinein- beziehungsweise heraus fließenden Strom I₂ und/oder I₄, sowie einem Ladungszustand SOC (state of charge) und/oder einem Alterungsparameter SOH (state of health) des ersten und/ oder zweiten Energiespeichers 2, 4 über Kontrollsignale C₃, C₅ und/oder C₇ die Spannungswandler 3, 5 und/oder 7.

Der zweite Energiespeicher 4 mit hoher Energiedichte ist einerseits über den zweiten Spannungswandler 5 mit dem Versorgungsnetz die Spannungswandler 3, 5 und/oder 7 und andererseits über den ersten Spannungswandler 3 mit dem Starternetz S elektrisch gekoppelt.

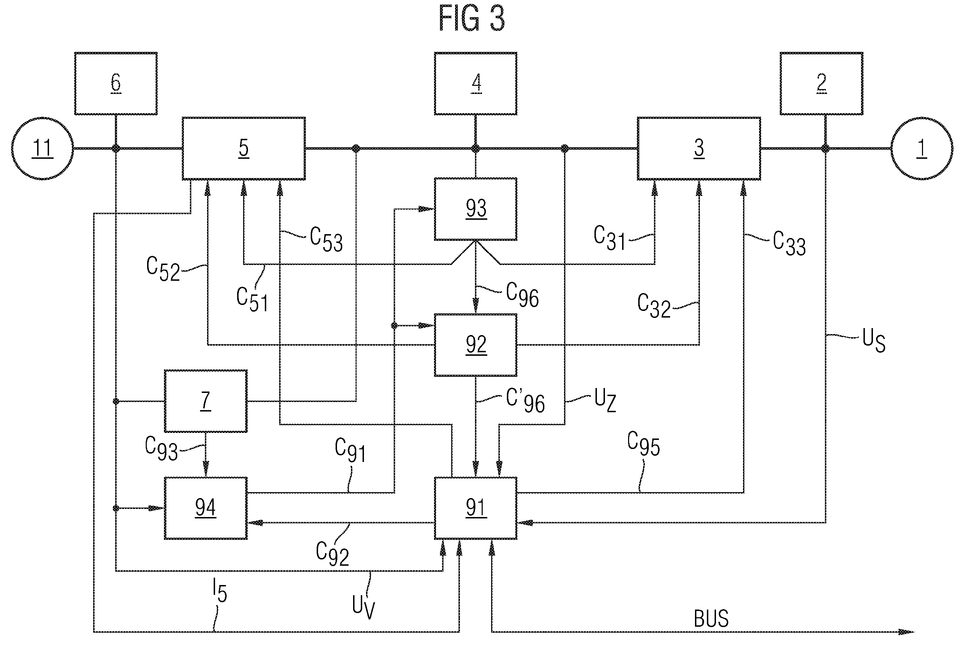

Figur 3 zeigt ein weiteres Ausführungsbeispiel eines Bordnetzes. Hierbei handelt es sich um eine detailliertere Darstellung des zweiten Ausführungsbeispiels gemäß Figur 2, welches auch Elemente aus dem ersten Ausführungsbeispiel gemäß Figur 1 enthält.

Die Erfindung beschränkt sich hier nicht auf die drei bevorzugten Ausführungsbeispiele. Vielmehr sind auch Kombinationen dieser drei Ausführungsbeispiele denkbar.

Im dritten Ausführungsbeispiel gemäß Figur 3 ist die Kontrolleinrichtung 9 detaillierter dargestellt. Sie weist hier eine Hauptkontrolleinheit 91, einen Treiber 92, einen Hauptschalter 93 und eine Weckschaltung 94 auf. Die Hauptkontrolleinheit 91 weist mehrere Eingänge auf, insbesondere Spannungseingänge für die Spannung U_{V} im Verbrauchernetz V, die Spannung U_{Z} im Zwischennetz Z und die Spannung U_{S} im Starternetz S. Des Weiteren weist Hauptkontrolleinheit 91 einen Eingang zur Überwachung des durch den zweiten Spannungsregler 5 fließenden Stroms I₅ auf. Die Hauptkontrolleinrichtung überwacht den Ladungszustand SOC (state of charge) des ersten und/oder zweiten Energiespeichers 2, 4. Weiter dient die Hauptkontrolleinheit 91 der Kommunikation des Bordnetzes mit den übrigen Systemen des Kraftfahrzeugs. Hierfür ist eine Kommunikationsleitung BUS vorgesehen, über die das Bordnetz beispielsweise mit einem zentralen Steuergerät des Kraftfahrzeugs kommunizieren kann.

Des Weiteren weist die Hauptkontrolleinheit 91 mehrere Ausgänge auf. Insbesondere wird über die Hauptkontrolleinheit die Weckschaltung 94 über das Steuersignal C₉₂ angesteuert. Über das Steuersignal C₉₂ kann die Hauptkontrolleinheit 91 insbesondere festlegen, ob ein Wechsel vom Arbeits- in den Ruhemodus zulässig ist. Das Steuersignal C₉₂ kann hier insbesondere in Abhängigkeit von einem Betriebszustand des Fahrzeugs beeinflusst werden.

Über eine weitere Steuerleitung C₉₄ wird die Treiberschaltung 92 angesteuert, die wiederum über ihre Ausgänge C₉₂ und C₅₂ durch die Leistungshalbleiter des ersten beziehungsweise zweiten Spannungswandlers 3, 5 ansteuert. Über die Treiberschaltung wird im Arbeitsmodus der erste und/oder zweite Spannungswandler 3, 5 so gesteuert, dass der mittlere Überschuss an Energie dem ersten und/oder zweiten Energiespeicher 2, 4 in geeigneter Weise zugeführt wird.

Beispielsweise kann der erste Spannungswandler 3 so gesteuert werden, dass nach einem Start der erste Energiespeicher 2 für einen nächsten Startversuch nachgeladen wird. Weiter kann nach dem Abstellen des Verbrennungsmotors oder für den Fall, dass das Kraftfahrzeug in einen Ruhezustand versetzt wird der erste Energiespeicher 2 bis auf eine Minimalspannung U_{Zmin} entladen werden. Hierdurch wird die Lebensdauer des ersten Energiespeichers 2 verlängert. Der Hauptschalter 93 kann über die Steuerleitungen C31, C51 und C96 den ersten und/oder zweiten Spannungswandler 3, 5, die Treiberschaltung 92 und/oder die Hauptkontrolleinrichtung 91 ein- oder abschalten. Der Hauptschalter 93 dient zur Minimierung des Energieverbrauchs im Ruhemodus.

Die Weckeinrichtung 94 dient der Umschaltung des Bordnetzes von einem Arbeits- in einen Ruhemodus. Hierzu weist die Weckschaltung 94 einen Weckeingang C₉₃ auf. Über diesen Weckeingang C₉₃ erhält die Weckschaltung 94 von dem dritten Spannungswandler 7 ein Signal C₉₃, dass im Bordnetz erhöhter Energiebedarf besteht. Infolgedessen wird über den Ausgang C₉₁ der Hauptschalter 93 und die Treiberschaltung 92 angesteuert, wodurch der zweite Spannungswandler 5 eingeschaltet wird und über den Spannungswandler 5 die Spannung U_{V} im Verbrauchernetz V stabilisiert wird. Weiter wird auch die Hauptkontrolleinrichtung 91 über den Eingang C_{96'} eingeschaltet, wodurch eine Überwachung und Laderegelung des ersten und zweiten Energiespeichers 2, 4 gestartet wird. Über die Datenschnittstelle BUS der Hauptkontrolleinheit 91 kann das Bordnetz mit anderen Steuergeräten kommunizieren und Status und Diagnoseinformationen übertragen. Auch kann beispielsweise der Fahrer in einem Fehlerfall informiert werden.

Weiter kann der Ladezustand SOC des zweiten Energiespeichers 4 überwacht werden, so dass bei einem Fahrzeug im Stillstand und einem hohen Entladestrom (beispielsweise bei "Zündung an") eine drohende Tiefentladung erkannt und diese anderen Steuergeräten oder dem Fahrer für ein Informationssignal mitgeteilt werden kann. Infolge einer solchen drohenden Tiefentladung können weiter nicht funktions- oder sicherheitsrelevante elektrische Verbraucher abgeschaltet und auf diese Weise die Standzeit des Bordnetzes verlängert werden. So kann beispielsweise bei Erreichen einer Entladegrenze, insbesondere einer minimalen Spannung der zweite Spannungswandler 5 ausgeschaltet werden, um eine Beschädigung des ersten und/oder zweiten Energiespeichers 2, 4 zu verhindern.

Die Spannung U_{V} im Verbrauchernetz V kann unabhängig von der Spannung des ersten und/ oder zweiten Energiespeichers 2,4 frei gewählt werden. Spannungsschwankungen im Verbrauchernetz V können vorzugsweise über den zweiten Spannungswandler 5 ausgeglichen werden.

## Patentansprüche

1. Bordnetz, das aufweist:
- ein Starternetz (S) mit einem Starter (1) und einem ersten Energiespeicher (2), insbesondere einem Doppelschichtkondensator,
- ein Zwischennetz (Z) mit einem zweiten Energiespeicher (4), insbesondere einem Lithium-Ionen- oder Lithium-PolymerAkkumulator;
- ein Verbrauchernetz (V) mit zumindest einem elektrischen Verbraucher (6) und einem Generator (11),
- wobei das Starternetz (S) mit dem Zwischennetz (Z) über einen ersten Spannungswandler (3) elektrisch gekoppelt ist,
- wobei das Zwischennetz (Z) mit dem Verbrauchernetz (V) über einen zweiten Spannungswandler (5) elektrisch gekoppelt ist, und
- wobei das Bordnetz eine Kontrolleinrichtung (9) aufweist, die dazu angepasst ist,
die elektrische Spannung (U_{Z}) im Zwischennetz (Z) in Abhängigkeit von einem Parameter (P), insbesondere von einem Parameter des zweiten Energiespeichers (4), zu steuern oder zu regeln und die elektrische Spannung (U_{V}) im Verbrauchernetz (V) in Abhängigkeit vom Betriebsmodus einer Brennkraftmaschine über den zweiten Spannungswandler (5) und/ oder den Generator (11) zu steuern oder zu regeln.

2. Bordnetz nach Anspruch 1, **dadurch gekennzeichnet, dass** dem zweiten Spannungswandler (5) ein dritter Spannungswandler (7) parallel geschaltet ist, wobei der dritte Spannungswandler (7) dazu angepasst ist, dass in einem Ruhezustand die Energieversorgung des Verbrauchernetzes (V), über den dritten Spannungswandler (7) erfolgt.

3. Bordnetz nach Anspruch 2, **dadurch gekennzeichnet, dass** das Bordnetz eine Weckschaltung aufweist, die dazu angepasst ist den zweiten Spannungswandler (5) ein- oder auszuschalten.

4. Bordnetz nach einem der vorhergehenden Patentansprüche, **dadurch gekennzeichnet, dass** der sich bei dem Parameter (P) um die Spannung über dem zweiten Energiespeicher (4), um den in oder aus dem zweiten Energiespeicher (4) hinein oder heraus fließenden Strom (I₄), um den Ladungszustand (SOC), einen Alterungszustand (SOH) des zweiten Energiespeichers (4) und/oder einem Betriebsparameter oder Betriebszustand eines Kraftfahrzeugs handelt.

5. Bordnetz nach einem der vorhergehenden Patentansprüche, **dadurch gekennzeichnet, dass** die Kontrolleinrichtung (9) dazu angepasst ist, die Spannung (U_{S}) im Starternetz (S) und/oder die Spannung (U_{V}) Verbrauchernetz (V) unabhängig von der Spannung (U_{Z}) im Zwischennetz (Z) steuert oder regelt.

6. Bordnetz nach einem der vorhergehenden Patentansprüche, **dadurch gekennzeichnet, dass** die Kontrolleinrichtung (9) dazu angepasst ist, in Abhängigkeit von dem Energiebedarf im Verbrauchernetz (V) den zweiten Spannungswandler (5) aus- oder einschaltet.

7. Bordnetz nach einem der vorhergehenden Patentansprüche, **dadurch gekennzeichnet, dass** die Energieversorgung des Verbrauchernetztes (V) bei abgeschaltetem zweiten Spannungswandler (5) über den dritten Spannungswandler (7) erfolgt.

## Claims

1. On-board power supply which has:
- a starter power system (S) having a starter (1) and a first energy store (2), in particular a double-layer capacitor,
- an intermediate power system (Z) having a second energy store (4), in particular a lithium-ion or lithium-polymer accumulator,
- a consumer power system (V) having at least one electrical consumer (6) and a generator (11),
- wherein the starter power system (S) is electrically coupled to the intermediate power system (Z) via a first voltage transformer (3),
- wherein the intermediate power system (Z) is electrically coupled to the consumer power system (V) via a second voltage transformer (5), and
- wherein the on-board power supply has a control device (9) which is adapted to performing open-loop or closed-loop control of the electrical voltage (U_{Z}) in the intermediate power system (Z) as a function of a parameter (P), in particular of a parameter of the second energy store (4), and
to performing open-loop or closed-loop control of the electrical voltage (U_{V}) in the consumer power system (V) as a function of the operating mode of an internal combustion engine via the second voltage transformer (5) and/or the generator (11).

2. On-board power supply according to Claim 1, **characterized in that** a third voltage transformer (7) is connected in parallel with the second voltage transformer (5), wherein the third voltage transformer (7) is adapted in such a way that in a quiescent state the energy supply of the consumer power system (V) is provided via the third voltage transformer (7).

3. On-board power supply according to Claim 2, **characterized in that** the on-board power supply has a wake-up circuit which is adapted to switching the second voltage transformer (5) on or off.

4. On-board power supply according to one of the preceding patent claims, **characterized in that** the parameter (P) is the voltage across the second energy store (4), the current (I₄) flowing in or out of the second energy store (4), the state of charge (SOC), a state of health (SOH) of the second energy store (4) and/or an operating parameter or operating state of a motor vehicle.

5. On-board power supply according to one of the preceding patent claims, **characterized in that** the control device (9) is adapted to performing open-loop or closed-loop control of the voltage (U_{S}) in the starter power system (S) and/or of the voltage (U_{V}) in the consumer power system (V) independently of the voltage (U_{Z}) in the intermediate power system (Z).

6. On-board power supply according to one of the preceding patent claims, **characterized in that** the control device (9) is adapted to switching the second voltage transformer (5) of or on as a function of the energy demand in the consumer power system (V).

7. On-board power supply according to one of the preceding patent claims, **characterized in that** the energy supply of the consumer power system (V) is provided via the third voltage transformer (7) when the second voltage transformer (5) is switched off.

## Revendications

1. Réseau de bord, qui possède .
- un réseau de démarreur (S) comprenant un démarreur (1) et un premier accumulateur d'énergie (2), notamment un condensateur à double couche,
- un réseau intermédiaire (Z) comprenant un deuxième accumulateur d'énergie (4), notamment un accumulateur au lithium-ion ou au lithium-polymère,
- un réseau de consommateurs (V) comprenant au moins un consommateur électrique (6) et un alternateur (11),
- le réseau de démarreur (S) étant connecté électriquement au réseau intermédiaire (Z) par le biais d'un premier convertisseur de tension (3),
- le réseau intermédiaire (Z) étant connecté électriquement au réseau de consommateurs (V) par le biais d'un deuxième convertisseur de tension (5), et
- le réseau de bord possédant un appareil de commande (9) qui est adapté pour commander ou réguler la tension électrique (U_{Z}) dans le réseau intermédiaire (Z) en fonction d'un paramètre (P), notamment d'un paramètre du deuxième accumulateur d'énergie (4),
et
pour commander ou réguler la tension électrique (U_{V}) dans le réseau de consommateurs (V) par le biais du deuxième convertisseur de tension (5) et/ou de l'alternateur (11) en fonction du mode de fonctionnement d'un moteur à combustion interne.

2. Réseau de bord selon la revendication 1, **caractérisé en ce qu'**un troisième convertisseur de tension (7) est branché en parallèle avec le deuxième convertisseur de tension (5), le troisième convertisseur de tension (7) étant adapté pour que dans un état de repos, l'alimentation en énergie du réseau de consommateurs (V) s'effectue par le biais du troisième convertisseur de tension (7).

3. Réseau de bord selon la revendication 2, **caractérisé en ce que** le réseau de bord possède un circuit de réveil qui est adapté pour mettre le deuxième convertisseur de tension (5) en circuit ou hors circuit.

4. Réseau de bord selon l'une des revendications précédentes, **caractérisé en ce que** le paramètre (P) est la tension aux bornes du deuxième accumulateur d'énergie (4), le courant (I₄) qui circule vers l'intérieur ou vers l'extérieur du deuxième accumulateur d'énergie (4), l'état de charge (SOC), un état de vieillissement (SOH) du deuxième accumulateur d'énergie (4) et/ou un paramètre de fonctionnement ou un état de fonctionnement d'un véhicule automobile.

5. Réseau de bord selon l'une des revendications précédentes, **caractérisé en ce que** l'appareil de commande (9) est adapté pour commander ou réguler la tension (U_{S}) dans le réseau de démarreur (S) et/ou la tension (U_{V}) dans le réseau de consommateurs (V) indépendamment de la tension (U_{Z}) dans le réseau intermédiaire (Z).

6. Réseau de bord selon l'une des revendications précédentes, **caractérisé en ce que** l'appareil de commande (9) est adapté pour mettre le deuxième convertisseur de tension (5) hors circuit ou en circuit en fonction du besoin en énergie du réseau de consommateurs (V).

7. Réseau de bord selon l'une des revendications précédentes, **caractérisé en ce que** lorsque le deuxième convertisseur de tension (5) est hors circuit, l'alimentation en énergie du réseau de consommateurs (V) s'effectue par le biais du troisième convertisseur de tension (7).
